# EUROPÄISCHE PATENTANMELDUNG

(11) **EP 2 700 656 A1**
(43) Veröffentlichungstag der Anmeldung: **26.02.2014**
(21) Anmeldenummer: 12181749.8
(22) Anmeldetag: 24.08.2012
(51) Int. Cl.: C08B 37/00

(54) **Carboxy-funktionalisiertes Alternan**

(71) Anmelder: aevotis GmbH, 14473 Potsdam (DE); Fraunhofer-Gesellschaft zur Förderung der angewandten Forschung, 80686 München (DE)
(72) Erfinder: Landschütze, Volker, 12203 Berlin (DE); Radosta, Sylvia, 14558 Nuthetal (DE); Vorwerg, Waltraud, 14469 Potsdam (DE)
(74) Vertreter: Beyer, Andreas

(57) **Zusammenfassung**

Funktionalisiertes Alternan, dadurch gekennzeichnet, dass es Carboxygruppen als funktionelle Gruppen aufweist und insbesondere durch die folgende Formel beschrieben werden kann 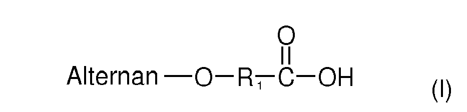 wobei R₁ eine Kohlenwasserstoffgruppe mit 1 bis etwa 100 Kohlenstoffatomen ist, die ein oder mehrere Heteroatome aufweisen kann, sowie Verfahren zur Herstellung eines solchen funktionalisierten Alternans im wässrigem Medium oder unter Verwendung eines Alkohols oder einer Alkohol-Wasser Mischung als Reaktionsmedium, und Verwendung des funktionalisierten Alternans.

## Beschreibung

Die vorliegende Erfindung betrifft ein Alternan, das mit Carboxygruppen funktionalisiert ist, ein Verfahren zu seiner Herstellung und Verwendungen dafür.

Alternan (CAS Registrierungs Nr.: 136510-13-9) ist ein Saccharid, das aus Anhydroglucoseeinheiten aufgebaut ist, die vorwiegend alternierend über α-1,3- und α-1,6-glycosidische Bindungen verknüpft sind. Daher gehört Alternan zur Gruppe der α-Glucane. Alternan sowie Verfahren zur Herstellung von Alternan sind aus dem Stand der Technik bekannt und z.B. beschrieben in Jeanes et al. (1954) J. Am. Chem. Soc., 76: 5041-5052, Misaki et al. (1980) Carbohydr. Res., 84: 273-285, Cote and Robyt (1982), Carbohydr. Res. , 101: 57-74, Cote (1992), Carbohydrate Polymers 19, 249-252, WO 00/47727, US 5,702,942, US20060127328, PCT/EP2008/051760.

Der Stand der Technik beschreibt derivatisiertes Alternan. Aus WO2010043423A1 sind Alternan-Carbonsäureester und ihre Verwendung als Emulgatoren bekannt.

Die Aufgabe der vorliegenden Erfindung besteht darin, ein Alternanmit neuartigen Eigenschaften zur Verfügung zu stellen. Es sollten neuartige Eigenschaften erzielt werden, welche das Alternan für bestimmte Anwendungen geeignet macht.

Diese Aufgabe wird durch das in Patentanspruch 1 bezeichnete Carboxy-funktionalisierte Alternan gelöst. Die Unteransprüche zu Anspruch 1 geben spezielle Ausführungsformen des funktionalisierten Alternans an.

Angegeben wird ein funktionalisiertes Alternan, dadurch gekennzeichnet, dass es Carboxygruppen als funktionelle Gruppen aufweist.

In einer Ausführungsform ist das funktionalisierte Alternan durch folgende Formel beschrieben:

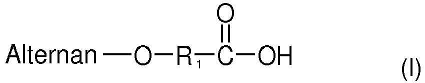

Wobei R₁ eine Kohlenwasserstoffgruppe mit 1 bis etwa 100 Kohlenstoffatomen ist, die ein oder mehrere Heteroatome aufweisen kann. Das Alternan gemäß Formel (I) kann eine oder mehrere der Gruppen -R₁-COOH aufweisen. Die Formel (I) ist so zu verstehen, dass nur eine solche Gruppe beispielhaft angegeben ist. Demzufolge wird ein Alternan angegeben, das mit einer oder mehreren der Gruppen -R₁-COOH funktionalisiert ist.

Der Sauerstoff zwischen "Alternan" und der Gruppe -R₁-COOH ist ein Sauerstoff aus einer Hydroxygruppe des nicht-funktionalisierten Alternans. Die Gruppe -R₁-COOH ist somit über einen solchen Sauerstoff mit dem Alternanrückgrat, d.h. mit dem Rückgrat des Alternan-Polysaccharids, verbunden.

Das erfindungsgemäße Verfahren zur Carboxylierung des Alternans weist folgende Spezifikationen auf:
- geringer Molmassenabbau
- man erhält trotz niedriger Substitutionsgrade ein wasserlösliches Produkt. Im Vergleich dazu sind zum Erhalt wasserlöslicher Carboxymethylcellulosen weitaus höhere Substitutionsgrade erforderlich

Es wurde überraschenderweise gefunden, dass das Carboxy-funktionalisierte Alternan, oder spezielle Ausführungsformen davon, die folgenden vorteilhaften Eigenschaften aufweisen:
- sehr gute Wasserlöslichkeit
- erhöhte Transparenz im Vergleich zu unmodifiziertem Alternan
- Herstellbarkeit konzentrierter wässriger Lösungen mit um Größenordnungen höherer Viskosität im Vergleich zu unmodifiziertem Alternan
- Herstellbarkeit von Hydrogelen mit hoher Transparenz
- Herstellbarkeit von Symplexstrukturen, wobei mit Simplexstrukturen Komplexe mit kationischen Polymeren bezeichnet sind

Der Begriff "Alternan" bezeichnet einen Stoff, der eingangs bereits definiert wurde. Unter dem Begriff "Alternan" sind in dieser Erfindung Alternanpolysaccharide zu verstehen. Statt des Begriffes "Alternan-Polysaccharid" wird nachfolgend auch verkürzend der Begriff "Alternan" gebraucht, der zum Zwecke der nachfolgenden Beschreibung der Erfindung das Polysaccharid bezeichnen soll. Der Begriff "Polysaccharid" bedeutet ein Polysaccharid mit einer mittleren Molmasse (Gewichtsmittel des Molekulargewichts)Mw von mindestens 3000 g/mol, vorzugsweise mindestens 5000 g/mol.

Der Begriff "Carboxy-funktionalisiertes Alternan" bezeichnet in dieser Erfindung ein Alternan, an das durch einen chemischen Prozess funktionelle Carboxy-Gruppen angebunden wurden. Statt des Begriffes "Carboxy-funktionalisiertes Alternan" wird in gleichbedeutender Weise abkürzend auch der Begriff "funktionalisiertes Alternan" verwendet.Ein anderer Ausdruck für "funktionalisiertes Alternan" ist der Begriff "derivatisiertes Alternan".

Der Begriff "Carboxygruppe", auch bekannt als "Carboxylgruppe" bedeutet eine funktionelle Gruppe der Formel -COOH. Von dem Begriff "Carboxygruppe" ist im Sinne dieser Erfindung auch das zugehörige Anion -COO⁻ (Carboxylat) umfasst. Je nach Umgebungsbedingungen, wie dem pH Wert der Umgebung kann die funktionelle Gruppe als -COOH oder -COO⁻ vorliegen.

In der Formel (I), und in weiteren nachfolgenden Formeln, bezeichnet der Begriff "Alternan" ein Alternanpolysaccharidmolekül. Der mit "Alternan" verbundene Sauerstoff ist ein Sauerstoff aus einer Hydroxygruppe des nicht funktionalisierten Alternans. Anhydroglucoseeinheiten des Alternans können an den freien OH-Gruppen in der C-2, C-3, C-4 und/oder C-6 Position funktionalisiert werden. Durch den alternierenden Bindungstyp des Alternans stehen jeweils alle OH-Gruppen der C-2 und C-4 Position des Monomerbausteins und jeweils ca. 50% der OH-Gruppen der C-3 und C-6 Position für eine Funktionalisierung zur Verfügung. Erfindungsgemäße Carboxy-funktionalisierte Alternane enthalten daher vorwiegend Funktionalisierungen an der C-2, C-3, C-4 und/oder der C-6 Position der Anhydroglucoseeinheit des Polymers.

R₁ bezeichnet eine Kohlenwasserstoffgruppe, wobei diese neben Kohlenstoff und Wasserstoff auch ein oder mehrere Heteroatome aufweisen kann. Bevorzugte Heteroatome sind, ohne Beschränkung, O, N, S, P, F, Cl, Br, I. Ein Heteroatom kann in eine Kohlenstoffkette integriert sein, sodass die Kohlenstoffkette, oder das Kohlenstoffrückgrat,durch das Heteroatom unterbrochen ist. Beispielsweise kann die Gruppe R₁ Ethereinheiten enthalten, wie -CH₂-O-CH₂-, Thioethereinheiten, wie -CH₂-S-CH₂-, oder -CH₂-NH-CH₂- Einheiten. In einer anderen Variante ist/sind das/die Heteroatom(e) an das Kohlenstoff-Rückgrat in Form eines Substituenten angefügt, beispielsweise in Form einer Oxo-, Hydroxy-, Mercapto-, Halogen-, Amino-, oder Nitrogruppe. Es sind von der Erfindung auch Ausführungsformen umfasst, bei denen die Gruppe R₁ eine oder mehrere weitere Carboxygruppen, zusätzlich zu der in Formel (I) bezeichneten Carboxygruppe, aufweist.

In einer speziellen Ausführungsform ist die Kohlenwasserstoffgruppevon R₁ausgewählt aus einer Alkylengruppe, einer Alkenylengruppe, einer Alkinylengruppe, einer Cycloalkylengruppe, einer Hetero-Cycloalkylengruppe, einer Arylengruppe, oder einer Hetero-Arylengruppe. Auch Mischungen davon sind in beliebiger Kombination umfasst, wie z.B.
- eine Kohlenwasserstoffgruppe, die aus einer oder mehrerenAlkylengruppen und einer oder mehreren Arylengruppen zusammengesetzt ist
- eine Kohlenwasserstoffgruppe, die aus einer oder mehr Alkylengruppen und einer oder mehr Cycloalkylengruppen zusammengesetzt ist.

Unter dem Begriff "Alkylgruppe" wird in der vorliegenden Erfindung eine monovalente, lineare oder verzweigte, gesättigte Kohlenwasserstoffgruppe verstanden. Eine Alkylgruppe kann mit einer oder mehreren funktionellen Gruppen substituiert sein, die ausgewählt sind aus Oxo, Hydroxy, Alkoxy, Carboxy, Aldehyd, Amino-, Monoalkylamino, Dialkylamino, Nitro, Fluor, Chlor, Brom und/oder Jod. Besonders bevorzugte Alkylengruppen sind Methyl (-CH₃), Ethyl (-CH₂CH₃), Propyl (-CH₂CH₂CH₃), Isopropyl (-CH(CH₃)₂), Butyl (-CH₂CH₂CH₂CH₃), Isobutyl (-CH₂CH(CH₃)CH₃), und tert-Butyl.

Unter dem Begriff "Alkylengruppe" wird in der vorliegenden Erfindung eine divalente, lineare oder verzweigte, gesättigte Kohlenwasserstoffgruppe verstanden. Eine Alkylengruppe kann mit einer oder mehreren funktionellen Gruppen substituiert sein, die ausgewählt sind aus Oxo, Hydroxy, Alkoxy, Carboxy, Aldehyd, Amino, Monoalkylamino-, Dialkylamino, Nitro, Fluor, Chlor, Brom und/oder Jod. Besonders bevorzugte Alkylengruppen, auch für R₁, sind Methylen (-CH₂-), Ethylen (-CH₂CH₂-), Propylen (-CH₂CH₂CH₂-), Isopropylen (-CH₂CH(CH₃)-), Butylen (-CH₂CH₂CH₂CH₂-), Isobutylen (-CH₂CH(CH₃)CH₂-), wobei Methylen am meisten bevorzugt ist.

Unter dem Begriff "Alkenylengruppe" wird in der vorliegenden Erfindung eine divalente, lineare oder verzweigte, Kohlenwasserstoffgruppe verstanden, die eine oder mehrere C-C-Doppelbindungen aufweist. Eine Alkenylengruppe kann einen oder mehrere Substituenten aufweisen, wie oben bei einer Alkylengruppe beschrieben.

Unter dem Begriff "Alkinylengruppe" wird in der vorliegenden Erfindung eine divalente, lineare oder verzweigte, Kohlenwasserstoffgruppe verstanden, die eine oder mehrere C-C-Dreifachbindungen aufweist. Eine Alkinylengruppe kann einen oder mehrere Substituenten aufweisen, wie oben bei einer Alkylengruppe beschrieben.

Unter dem Begriff "Cycloalkylengruppe" wird in der vorliegenden Erfindung eine divalente gesättigte oder teilweise ungesättigte, nicht-aromatische, carbocyclische Gruppe verstanden, die vorzugsweise aus mono-, bi- oder tricyclischen Kohlenstoffringen besteht, wobei die Cyclen kondensiert oder anderweitig verknüpft sein können. Eine Cycloalkylengruppe kann einen oder mehrere Substituenten aufweisen, wie oben bei einer Alkylengruppe beschrieben.

Unter dem Begriff "Hetero-Cycloalkylengruppe" wird in der vorliegenden Erfindung eine divalente gesättigte oder teilweise ungesättigte, nicht-aromatische, carbocyclische Gruppe verstanden, die vorzugsweise aus mono-, bi- oder tricyclischen Kohlenstoffringen besteht, wobei die Cyclen kondensiert oder anderweitig verknüpft sein können, und wobei weiterhin einer oder mehrere Kohlenstoffatome aus dem Ringsystem durch ein Heteroatom ersetzt sind, insbesondere Stickstoff, Sauerstoff oder Schwefel. Eine Hetero-Cycloalkylengruppe kann einen oder mehrere Substituenten aufweisen, wie oben bei einer Alkylengruppe beschrieben.

Unter dem Begriff "Arylengruppe" wird in der vorliegenden Erfindung eine divalente cyclische aromatische Gruppe verstanden, die vorzugsweise mono-, bi oder tricyclisch sein kann, wobei die Cyclen kondensiert oder anderweitig durch C-C Bindungen verknüpft sein können. Beispiele sind Phenylen, Naphtyhlen, Biphenylen, Anthracylen und Phenantrylen. Eine Arylengruppe kann einen oder mehrere Substituenten aufweisen, wie oben bei einer Alkylengruppe beschrieben.

Unter dem Begriff "Hetero-Arylengruppe" wird in der vorliegenden Erfindung eine divalente cyclische aromatische Gruppe verstanden, die vorzugsweise mono-, bi- oder tricyclisch ist, wobei die Cyclen kondensiert oder anderweitig durch C-C Bindungen verknüpft sein können, und wobei weiterhin einer oder mehrere Kohlenstoffatome aus dem Ringsystem durch ein Heteroatom ersetzt sind, insbesondere Stickstoff, Sauerstoff oder Schwefel. Eine Hetero-Arylengruppe kann einen oder mehrere Substituenten aufweisen wie oben bei einer Alkylengruppe beschrieben.

In einer Ausführungsform betrifft die Erfindung ein funktionalisiertes Alternan, das durch folgende Formel (II) beschrieben ist: 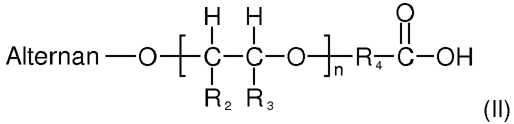 wobei
n eine ganze Zahl von 1 bis etwa 30, vorzugsweise von 1 bis etwa 20, noch mehr bevorzugt 1 bis etwa 10 ist,
R₂ und R₃ ausgewählt sind aus H oder einer Kohlenwasserstoffgruppe mit 1 bis etwa 6 Kohlenstoffatomen, wobei R₂ und R₃ in den -(CHR₂-CHR₃O)- Einheitengleich oder verschieden sein können und jeder R₂ und R₃ in einer -(CHR₂-CHR₃O)- Einheit unabhängig ausgewählt sein kann von jedem R₂ und R₃ in einer anderen -(CHR₂-CHR₃-O)- Einheit,
R₄ eine Kohlenwasserstoffgruppe mit 1 bis etwa 10 Kohlenstoffatomen ist,
und wobei an dem Alternan eine oder mehrere der Gruppen
-[CHR₂-CHR₃-O]ₙR₄COOH vorhanden sein können.

In dieser Ausführungsform entspricht die oben bei Formel (I) definierte Gruppe R₁ einer Gruppe -[CHR₂-CHR₃-O]ₙR₄-.

Der Sauerstoff zwischen "Alternan" und der Gruppe -[CHR₂-CHR₃-O]ₙR₄COOH ist ein Sauerstoff aus einer Hydroxygruppe des nicht-funktionalisierten Alternans. Die Gruppe -[CHR₂-CHR₃-O]ₙR₄COOH ist somit über einen solchen Sauerstoff mit dem Alternanrückgrat, d.h. mit dem Rückgrat des Alternan-Polysaccharids, verbunden.

R₂ kann im Speziellen ausgewählt sein aus Wasserstoff, einer Alkylgruppe, oder einer Phenylgruppe. Vorzugsweise ist R₂ C₁ bis C₄ Alkyl oder Wasserstoff, noch mehr bevorzugt eine Methylgruppe, eine Ethylgruppe oder Wasserstoff, und am meisten bevorzugt eine Methylgruppe oder Wasserstoff. Diese R₂ können mit jedem Wert n kombiniert werden.

R₃ kann im Speziellen ausgewählt sein aus Wasserstoff, einer Alkylgruppe, oder einer Phenylgruppe. Vorzugsweise ist R₃ C₁ bis C₄ Alkyl oder Wasserstoff, noch mehr bevorzugt eine Methylgruppe, eine Ethylgruppe oder Wasserstoff, und am meisten bevorzugt eine Methylgruppe oder Wasserstoff. Diese R₃ können mit jedem R₂und jedem Wert n kombiniert werden.

In einer Ausführungsform, die mit jedem Wert n kombiniert werden kann, ist R₂ Wasserstoff und R₃ ist Wasserstoff, Methyl- oder Ethyl, am meisten bevorzugt Wasserstoff oder Methyl.

In einer Ausführungsform, die mit jedem Wert n kombiniert werden kann, ist R₃Wasserstoff und R₂ ist Methyl- oder Ethyl, am meisten bevorzugt Methyl.

R₄ ist in einer Ausführungsform, die mit jeder der obigen Varianten für R₂ und R₃ kombinierbar ist, eine Alkylengruppe, vorzugsweise Methylen (-CH₂-), Ethylen (-CH₂CH₂-), Propylen (-CH₂CH₂CH₂-), Isopropylen (-CH₂CH(CH₃)-), Butylen (-CH₂CH₂CH₂CH₂-), Isobutylen (-CH₂CH(CH₃)CH₂-), wobei Methylen am meisten bevorzugt ist.

In einer weiteren Ausführungsform wird ein funktionalisiertes Alternan angegeben, das außerdem, d.h. zusätzlich zu den Carboxy-Funktionalisierungen, die in den Formeln (I) und (II) angegeben sind, eine oder mehrere der Gruppen der Formel (III) aufweist 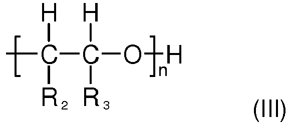 wobei die Gruppe der Formel (III) über eine Etherbrücke mit dem Alternanpolysaccharid verbunden ist,
n eine ganze Zahl von 1 bis etwa 30, vorzugsweise von 1 bis etwa 20, noch mehr bevorzugt 1 bis etwa 10 ist,
R₂ und R₃ ausgewählt sind aus H oder einer Kohlenwasserstoffgruppe mit 1 bis etwa 6 Kohlenstoffatomen, wobei R₂ und R₃ in den -(CHR₂-CHR₃O)- Einheitengleich oder verschieden sein können und jeder R₂ und R₃ in einer -(CHR₂-CHR₃O)- Einheit unabhängig ausgewählt sein kann von jedem R₂ und R₃in einer anderen -(CHR₂-CHR₃-O)- Einheit,

Die Verbindung über eine Etherbrücke bedeutet, dass die Gruppe der Formel (III) an einen Sauerstoff eines Alternans angebunden wird. Der Sauerstoff entstammt einer Hydroxygruppe des Alternan-Ausgangsstoffes. Die Gruppe der Formel (III) ist somit über einen solchen Sauerstoff mit dem Alternanrückgrat, d.h. mit dem Rückgrat des Alternanpolysaccharids, verbunden. Die Verbindung der Gruppe der Formel (III) zu "Alternan" ist somit analog wie bei der Struktur der Formel (II).

Die Gruppen R₂ und R₃in Formel (III) haben auch im Speziellen die gleiche Bedeutung, auch hinsichtlich spezieller Ausführungsformen, wie weiter oben bei Formel (II) angegeben.

In einer Ausführungsform wird ein funktionalisiertes Alternan angegeben, dessen Moleküle überwiegend oder ausschließlich einen Polymerisationsgrad (DP) von mindestens 10, vorzugsweise mindestens 100, oder mindestens 1000, oder mindestens 10000, oder mindestens 100000, noch mehr bevorzugt mindestens 150000 aufweisen. Der Begriff "überwiegend" bedeutet in einer bevorzugten Definition, dass der Anteil der Alternan-Moleküle mit dem angegebenen Mindest-DP mehr als 95 Gew.-% beträgt, bezogen auf des Gesamtgewicht aller Alternanmoleküle, mehr bevorzugt mehr als 97 Gew.-%, noch mehr bevorzugt mehr als 99 Gew.-%.

In einer speziellen Ausführungsform, die mit der vorherigen und weiteren Ausführungsformen kombinierbar ist, weist das funktionalisierte Alternan eine mittlere MolmasseMw im Bereich von 3.000 g/mol bis 60.000.000 g/mol auf, noch mehr bevorzugt 5.000 g/mol bis 60.000.000 g/mol, 10.000 g/mol bis 60.000.000 g/mol, oder 20.000 g/mol bis 60.000.000 g/mol, am meisten bevorzugt 50.000 g/mol bis 60.000.000 g/mol, 100.000 g/mol bis 60.000.000 g/mol, oder 500.000 g/mol bis 60.000.000 g/mol. Weitere Bereiche sind 1.000.000 g/mol bis 60.000.000 g/mol, 5.000.000 g/mol bis 60.000.000 g/mol oder 10.000.000 g/mol bis 60.000.000 g/mol.

In einer weiteren bevorzugten Ausführungsform weist das funktionalisierte Alternan eine mittlere Molmasse Mw im Bereich von 12.000.000 bis 30.000.000 g/mol, mehr bevorzugt 14.000.000 bis 28.000.000 g/mol, noch mehr bevorzugt 16.000 000 bis 26.000.000 g/mol, am meisten bevorzugt 19.000.000 bis 23.000.000 g/mol auf. Nicht funktionalisierter Alternan-Ausgangsstoff mit einem solchen Mw kann mit Hilfe einer verkürzten Alternansucrase hergestellt werden. Die verkürzten Alternansucrasen, das Herstellungsverfahren für solches spezielles Alternan sowie das Alternan sind beschrieben in der internationalen Anmeldung PCT/EP2008/051760, auf welche hier ausdrücklich verwiesen wird.

Methoden zur Bestimmung der mittleren Molmasse (Mw) sind dem Fachmann bekannt und umfassen z.B. Bestimmungsmethoden mittels GPC (Gel Permeations Chromatographie) gekoppelt mit entsprechenden Detektionsverfahren wie Differentialrefraktometer und MALLS (Multi Angle Laser Light Scattering). Eine im Zusammenhang mit der vorliegenden Erfindung bevorzugte Methode zur Bestimmung derMolmassenverteilung(MMD) und des Gewichtsmittels der Molmasse (Mw) mit GPC-MALLS ist unter dem Kapitel "Allgemeine Methoden", beschrieben.

In einer weiteren Ausführungsform der Erfindung wird ein funktionalisiertes Alternan angegeben, bei dem die durchschnittliche Anzahl Carboxy-funktionalisierter Hydroxylgruppen des Alternans pro Anhydroglucoseeinheit 0,01 bis 3 beträgt, oder 0,02 bis 3, vorzugsweise 0,04 bis 3.

In einer weiteren Ausführungsform beträgt die durchschnittliche Anzahl Carboxy-funktionalisierter Hydroxylgruppen des Alternans pro Anhydroglucoseeinheit 0,05 bis 3, bevorzugt 0,05 bis 2, noch mehr bevorzugt 0,05 bis 1, oder 0,05 bis 0,5, am meisten bevorzugt 0,05 bis 0,4, oder 0,05 bis 0,3, oder 0,05 bis 0,2, oder 0,05 bis 0,1. Solche Werte werden erzielt, wenn z.B. Carboxy-funktionalisiertes Alternan nach den nachfolgend noch beschriebenen Verfahren unter Verwendung eines Alkohols als Reaktionsmedium hergestellt wird. Insbesondere werden dann auch Werte in folgenden Bereichen erhalten: 0,055 bis 3, bevorzugt 0,055 bis 2, noch mehr bevorzugt 0,055 bis 1, oder 0,055 bis 0,5, am meisten bevorzugt 0,055 bis 0,3, oder 0,055 bis 0,2, oder 0,055 bis 0,1.

In noch einer Ausführungsform beträgt die durchschnittliche Anzahl Carboxy-funktionalisierter Hydroxylgruppen des Alternans pro Anhydroglucoseeinheit >0,5 bis 3, vorzugsweise 0,55 bis 3, oder sogar >0,6 bis 3, insbesondere 0,65 bis 3.

Die Art der Carboxy-Funktionalisierung an Hydroxylgruppen des noch nicht funktionalisierten Alternans ist beispielhaft anhand der Formeln(I)und (II) beschrieben. Bei Formel (I) ist der Sauerstoff zwischen "Alternan" und der mit "R₁COOH" bezeichneten Gruppe ein Sauerstoff aus einer Hydroxylgruppe des noch nicht funktionalisierten Alternans (Alternan-Ausgangssubstanz). Bei der Formel (II) ist der Sauerstoff zwischen "Alternan" und der mit -[CHR₂-CHR₃-O]ₙR₄COOH bezeichneten Gruppe ein Sauerstoff aus einer Hydroxylgruppe des noch nicht funktionalisierten Alternans. Bei der anhand der Formel (I) und (II) gezeigten Funktionalisierung wird eine Hydroxygruppe des Alternans in eine Etherbrücke -O- überführt und eine funktionelle Carboxylgruppe wird angebunden, über unterschiedliche Zwischenstrukturen, wie in (I) und (II) gezeigt. Dies wird als "Carboxy-Funktionalisierung an einer Hydroxylgruppe" bezeichnet. Weitere Arten der Carboxy-Funktionalisierung, die von Strukturen der Formeln (I) und (II) abweichen sind möglich.

Die durchschnittliche Anzahl funktionalisierter Hydroxylgruppen des Alternans pro Anhydroglucoseeinheit wird auch als "Substitutionsgrad" bezeichnet und mit "DS" (Degree of Substitution) abgekürzt. Pro Anhydroglucoseeinheit stehen maximal drei freie Hydroxylgruppen zur Verfügung, sodass der DS maximal 3 betragen kann, wenn alle drei Hydroxylgruppen substituiert wurden und entlang der Kette keine Unterschiede zwischen den Monomeren bestehen. Alle oben genannten DS-Bereiche sind in beliebiger Kombination mit allen zuvor genannten Molmassenbereichen und DP-Bereichen des funktionalisierten Alternans kombinierbar.

Alle oben genannten DS-Bereiche sind in beliebiger Kombination mit allen zuvor genannten Molekulargewichtsbereichen und DP-Bereichen des funktionalisierten Alternans kombinierbar.

In der vorliegenden Erfindung ist es möglich, ein Carboxy-funktionalisiertes Alternan herzustellen, dass eine Kombination von hohem Mw, wie oben angegeben, und hohem DS aufweist, insbesondere DS 0,05 oder höher bis zu den genannten, verschiedenen Obergrenzen. Ein solches Produkt kann durch ein Verfahren erhalten werden, bei dem das flüssige Reaktionsmedium vorwiegend einen Alkohol aufweist.

In einer Ausführungsform ist das funktionalisierte Alternan vernetzt. Die Vernetzung kann eine reversible oder eine irreversible Vernetzung sein, beispielsweise eine physikalische oder chemische Vernetzung, vorzugsweise eine chemische Vernetzung. Eine Reihe von Agenzien und Verfahren, sind für die reversible und/oder irreversible Vernetzung von Hydroxylgruppen des Alternans geeignet. Vernetzungsmittel werden weiter unten anhand des Herstellungsverfahrens eines funktionalisierten, vernetzten Alternans erläutert.

Vorzugsweise ist das funktionalisierte Alternan wasserlöslich. Der Begriff "wasserlöslich" bedeutet insbesondere eine Wasserlöslichkeit bis zu 5 Gew.-% oder mehr, vorzugsweise bis zu 7 Gew.-% oder mehr. Es wurde überraschenderweise gefunden, dass bei den erzielten und oben beschriebenen Substitutionsgraden das Produkt in Abhängigkeit von DS-Wert und Konzentration viskositätsstabile wässrige Lösungen oder Gele bildet.Diese Eigenschaft ist überraschend, da in WO0047628 eine Unlöslichkeit für derivatisierte Polysaccharide mit solchen Substitutionsgraden beschrieben wird. Bei relativ hohen DS-Werten können Hydrogele erzeugt werden, die die anwendbare Konzentration für eine noch fließfähige Lösung einschränken.

Ebenfalls ist das erhaltene funktionalisierte Alternan vorzugsweise nicht mikrostrukturiert. Insbesondere ist das funktionalisierte Alternan nicht mikrofibrillär, d.h. es weist keine Mikrofibrillen auf. Unter dem Begriff "mikrofibrillär" sind Strukturen zu verstehen, die in WO0047628 anhand von Cellulose und derivatisierter Cellulose beschrieben sind. In WO0047628, S. 11, Z. 5-15, werden Mikrofibrillen als Substrukturen mit kleinem Durchmesser und hohem Länge-zu-Durchmesser-Verhältnis definiert, die in ihren Dimensionen mit natürlichen Cellulose-Mikrofibrillen vergleichbar sind. Beispielhaft sind dort Mikrofibrillen mit einem Durchmesser von etwa 20 bis etwa 100 nm genannt, und einem hohen Länge-zu-Durchmesser-Verhältnis, wie mehr als 100, 500 oder 1000. Natürliche Cellulose-Mikrofibrillen werden in WO0047628 als Bündel beschrieben, die parallel innerhalb einer Matrix amorpher Strukturen verlaufen (WO0047628, S. 10, Z. 25 - S. 11, Z. 4, worauf hier ausdrücklich Bezug genommen wird).

Es ist mit bisher bekannten Spinntechniken für Cellulose, wie in WO0047628, S. 11 beschrieben, auch nicht möglich, das funktionalisierte Alternan der vorliegenden Erfindung in einen mikrofibrillären oder faserförmigen Zustand zu bringen. Versuche haben gezeigt, dassdas gelöste funktionalisierte Alternanbeim Austritt aus einer Spinndüse in einem Fällbad nicht zu Filamenten koaguliert.

In einer weiteren Ausführungsform weist das funktionalisierte Alternan keine cyclischen Alternanmoleküle auf, sondern nur nicht-cyclische Alternanmoleküle, d.h. in sich nicht geschlossene Ketten.

In noch einer weiteren Ausführungsform weist das funktionalisierte Alternan überwiegend nicht-cyclische Alternanmoleküle auf

In einem weiteren Aspekt betrifft die Erfindung ein Verfahren zur Funktionalisierung von Alternan mit Carboxygruppen, wobei Alternan in einem flüssigen Reaktionsmedium, das vorwiegend oder ausschließlich Wasser oder vorwiegend oder ausschließlich einen Alkohol aufweist, mit einem Funktionalisierungsmittel, das eine Carboxygruppe aufweist, unter Zusatz einer alkalischen Komponente umgesetzt wird.

Besonders bevorzugt ist der Einsatz eines flüssigen Reaktionsmediums, das vorwiegend oder ausschließlich einen Alkohol aufweist.Mit einem solchen Verfahren, oder speziellen Ausführungsformen davon, wird insbesondere der folgende Vorteil erzielt: Es werden höhere Substitutionsgrade und Reagenzausbeuten im Vergleich zu einem System erreicht, in dem ein rein wässriges alkalisches Reaktionsmedium eingesetzt wird. Es kann die Menge des eingesetzten Funktionalisierungmittels begrenzt werden. D.h. es ist zur Erzielung relativ hoher DS-Werte relativ wenig Funktionalisierungsmittel erforderlich. Ein hoher DS ist vorteilhaft wenn das funktionalisierte Alternan zur Metallkomplexierung oder zur Symplexbildung eingesetzt wird.

In rein wässrigem Medium wurden selbst bei langen Reaktionszeiten von 24 h und einer Temperatur von 60°C Reagenzausbeuten von < 10% erreicht, so dass nur DS-Werte <0,05 herstellbar waren, wenn auf eine Erhöhung des Reagenzüberschusses verzichtet wurde.

Wenn das flüssige Reaktionsmedium vorwiegend einen Alkohol aufweist, dann bedeutet dies einen Volumenanteil von >50 Vol.-%, mehr bevorzugt >60 Vol.-%, oder >70 Vol.-%, oder >80 Vol.-%, am meisten bevorzugt >90 Vol.-%. Als weitere flüssige Komponente kann beispielsweise ein Anteil Wasser vorhanden sein, insbesondere wenn wässriges Alkali als alkalische Komponente zugegeben wird, die als Katalysator fungiert, wie nachfolgend beschrieben. Insbesondere ist das Reaktionsmedium eine Alkohol-Wasser Mischung mit dem oben angegebenen Vol.-% Alkohol.

Mit dem Begriff "Alternan" ist in diesem Zusammenhang ein noch nicht funktionalisiertes Alternan, also der Alternan-Ausgangsstoff gemeint. Vorzugsweise wird bei dem noch nicht funktionalisierten Alternan die Molmasse so gewählt, dass ein funktionalisiertes Alternan mit einer mittleren Molmasse Mw erhalten wird wie bereits zuvor bei der Beschreibung des funktionalisierten Alternans angegeben.

Der Alkohol ist in einer Ausführungsform ausgewählt aus Methanol, Ethanol, Propanol, Isopropanol, Butanol, oder Isobutanol, oder einer beliebigen Mischung davon.

Unter einer alkalischen Komponente, als Katalysator,ist erfindungsgemäß eine Substanzzu verstehen, die Hydroxidionen (OH-) enthält oder nach Zusatz zu dem Reaktionsgemisch Hydroxidionen bildet. Dazu gehören Laugen, Carbonate und Oxide der Erdalkalien. Der Katalysator kann flüssig, fest oder gasförmig sein. Bevorzugt wird eine flüssige alkalische Komponente eingesetzt.

In einer Ausführungsform ist die alkalische Komponente eine wässrige Lösung oder Suspension eines Alkali- oder Erdalkalihydroxides oder eine wässrige Lösung oder Suspension eines Erdalkalioxides. Das Hydroxid ist vorzugsweise ausgewählt aus Lithiumhydroxid, Natriumhydroxid, Kaliumhydroxid, Bariumhydroxid und Calciumhydroxid, wobei vorzugsweise die alkalische Komponente wässrigesNatriumhydroxid oder wässrigesKaliumhydroxidoder in Wasser gelöstes Calciumoxid ist.

Das Verfahren kann in folgenden Schritten durchgeführtwerden:
a) Lösen und/oder Suspendieren von Alternan in einem alkalisch-wässrigen Medium,worin Alternan quillt und partiell gelöst wird.
b) Hinzugabe von Alkohol, beispielsweise Ethanol, zur Entquellung des alkalisierten Alternans, vorzugsweise unter Rühren,
c) Oder alternativ zu a) und b) direkte Suspendierung des Alternans in alkalischem Alkohol, beispielsweise Ethanol
d) Oder alternativ zu a), b) und c) die Suspendierung von Alternan in Alkohol, beispielsweise Ethanol, und Zugabe von Alkali, z.B. in flüssiger oder trockener Form
e) Zugabe des Funktionalisierungsmittels, vorzugsweise unter Rühren.
f) Erwärmung auf Reaktionstemperatur und Durchführung der Reaktion, vorzugsweise bei Konstanthaltung der Synthesetemperatur, vorzugsweise unter Rühren

Anschließend können die folgenden Schritte durchgeführt werden:
g) Beendigung der Synthese durch Abkühlung und vorzugsweise weitererAlkoholzugabe, z.B. Ethanolzugabe
h) Separation des Alternans

Weiterhin können die folgenden Aufarbeitungs- und Reinigungsschritte durchgeführt werden:
i) Suspendierung des Alternanproduktes, vorzugsweisein Alkohol/Wasser-Gemisch, beispielsweisein MeOH/Wasser (zum Beispiel 8:2; v/v)
j) Einstellung eines neutralen oder annähern neutralen pH-Wertes, beispielsweise mit Eisessig
k) Waschen des Produktes, beispielsweise in Alkohol/Wasser-Gemisch und/oder Alkohol, insbesondere mit MeOH/Wasser (8:2; v/v) und nachfolgend mit Methanol
I) Trocknung, beispielsweise Vakuumtrocknung

Ob in Schritt a) eine Lösung oder Suspension erhalten wird, hängt von der Konzentration des nicht-funktionalisierten Alternans, von der Löslichkeit des nicht-funktionalisierten Alternans, die unter anderem durch seine Molmasse bedingt ist, ab. Vorzugsweise wird eine gequollene Suspension hergestellt.

Das Verfahren wird vorzugsweise bei Normaldruck, d.h. Umgebungsdruck, durchgeführt.

Die Gerätschaft zur Durchführung des Verfahrens ist nicht auf spezielle beschränkt. Generell können Reaktoren eingesetzt werden, welche auch bei der Herstellung von Carboxymethylcellulose verwendet werden. Beispielhaft zu nennen sind Rührkessel, Rohrreaktoren und Kneter.

Das Verfahren wird vorzugsweise bei einer Temperatur von 10°C bis 80°C durchgeführt, vorzugsweise 20 - 70 °C, insbesondere wenn ein Alkohol, insbesondere Ethanol oder (Iso)Propanol, verwendet wird. Bei Ethanol beträgt eine bevorzugte Temperatur 20°C bis 70°C, noch mehr bevorzugt 20°C bis 40°C. Die maximale Temperatur wird bei Normaldruck durch die Siedetemperatur des verwendeten Alkohols bestimmt und vorzugsweise liegt die maximal gewählte Temperatur unterhalb der Siedetemperatur.

Zum Erhalt von Verbindungen der Formel (I) kann nicht-funktionalisiertes Alternan einem Funktionalisierungsmittel umgesetzt werden, das die folgende Formel (IV)aufweist. 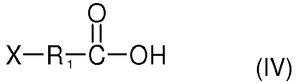 wobei R₁die gleiche Bedeutung hat wie oben bei Formel (I) beschrieben und X ein Halogenatom, insbesondere Chlor-, Brom- oder Jodist.Besonders bevorzugte Funktionalisierungsmittel sind Chloressigsäure und Bromessigsäure, oder Salze davon, wie beispielsweise Alkalimetallsalze. Durch Umsetzung damit können funktionalisierte Alternane der Formel (I) hergestellt werden, wobei R₁ Methylen ist.

Nachfolgend werden Verfahrensvariantenbeschrieben, wobei das nicht-funktionalisierte Alternan, oder das mit Carboxygruppen funktionalisierte Alternan, mit einer oder mehreren Epoxyverbindungen umgesetzt wird.

In einer ersten Verfahrensvariante wird nicht-funktionalisiertes Alternan zuerst mit einer oder mehreren Epoxyverbindung(en) umgesetzt, die vorzugsweise die Formel (V) aufweist/aufweisen: 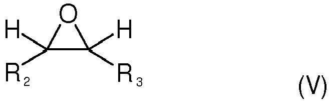 wobei R₂ und R₃ definiert sind wie oben bei Formel (II) angegeben. Bevorzugte Verbindungen der Formel (V) sind Ethylenoxid und Propylenoxid. Man erhält ein Alternan, das als Funktionalisierungen eine oder mehrere der Gruppen der Formel (III) aufweist

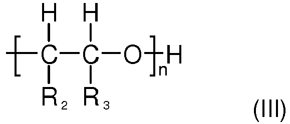

Wobei n eine ganze Zahl von 1 bis 30, vorzugsweise von 1 bis etwa 20, noch mehr bevorzugt 1 bis etwa 10 ist. Anschließend kann dieses Produkt mit einer Verbindung der Formel (VI) umgesetzt werden, 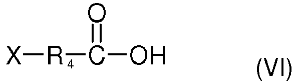 wobei R₄ eine Kohlenwasserstoffgruppe mit 1 bis etwa 10 Kohlenstoffatomen, vorzugsweise eine Methylengruppe ist, und X ein Halogenatom, insbesondere Chlor-, Brom- oder Jod ist. Als Produkt wird eine Verbindung erhalten, die Strukturen der Formel (II) 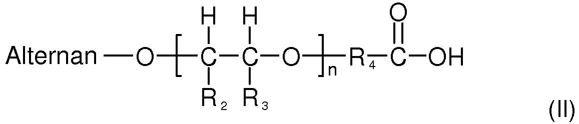 aufweist, wobei an dem Alternan eine oder mehrere der Gruppen -[CHR₂-CHR₃-O]ₙR₄COOH vorhanden sein können.

Die Verbindung der Formel (VI) kann mit endständigen OH-Gruppen reagieren, die an Gruppen der Formel (III) vorhanden sind. Diese Umsetzung muss nicht vollständig sein. Bei nicht vollständiger Umsetzung erhält man ein funktionalisiertes Alternan, das Strukturen der Formel (II) und außerdem noch Gruppen der Formel (III) aufweist. Der Umsetzungsgrad kann durch die Reagenzmenge und Reaktionsbedingungen eingestellt werden.

Außerdem kann die Verbindung der Formel (VI) auch mit freien, nicht-funktionalisierten OH-Gruppen reagieren, die direkt am Alternanrückgrat vorhanden sind, also mit OH-Gruppen, die zuvor nicht mit Gruppen der Formel (III) funktionalisiert wurden. In diesem Fall werden zusätzlich Strukturen der Formel (VII) erhalten

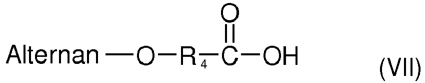

In einer zweiten Variante des Verfahrens wird ein bereits Carboxygruppenfunktionalisiertes Alternan, das Strukturen der Formel (I) 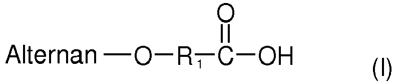 aufweist, mit einer Epoxyverbindung, oder mehreren verschiedenen Epoxyverbindungen, umgesetzt, die vorzugsweise die Formel (V) aufweist/aufweisen:

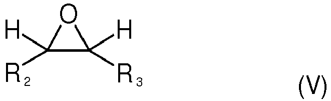

Man erhält dann ein Carboxy-funktionalisiertes Alternan, das Strukturen der Formel (I) und außerdem Gruppen der obigen Formel (III) aufweist.

Weitere Verfahrensvarianten durch unterschiedliche Reihenfolgen von Umsetzungsschritten sind möglich.

Die Molverhältnisse der in dem Verfahren eingesetzten Stoffe werden je nach dem gewünschten Ergebnis gewählt. Insbesondere wird das Molverhältnis von Alternanmonomer (Anhydroglucose) zu Funktionalisierungsmittel auf den gewünschten Substitutionsgrad abgestimmt.

Beispielsweise können die folgenden Molverhältnisse eingesetzt werden:

Verhältnis von Alternanmonomer (Anhydroglucose) : Funktionalisierungsmittel von 1 : 0,01 bis 1 :5, vorzugsweise 1 : 0,1 bis 1 : 2.

Das Verhältnis von Alternanmonomer (Anhydroglucose) : Hydroxydionen der alkalischen Komponente kann gewählt werden wie aus der Herstellung von Carboxymethylcellulose bekannt. Ein beispielhafter Bereich ist 1 : 0,1 bis 1 : 2.

In dem Verfahren kann das funktionalisierte Alternan vernetzt werden oder Alternan kann zunächst vernetzt und anschließend funktionalisiert werden, wobei ersteres bevorzugt ist. Somit enthält das Verfahren in einer Ausführungsform einen Vernetzungsschritt.

Die Vernetzung kann eine chemische Vernetzung sein, die beispielsweise mit folgenden Vernetzungsmitteln durchgeführt werden kann:
- Niedermolekulare Aldehyde, Ketone und Oxidationsmittel, wie beispielsweise Formaldehyd, Glyoxal, Brenztraubensäure, Glutaraldehyd.
- Organische, mehrbasige Säurechloride und deren Derivate, wie beispielsweise Bernsteinsäure, Glutarsäure, Citronensäure, Adipinsäure, Apfelsäure, Malonsäure, Weinsäure.
- Anorganische vernetzende Agenzien, wie beispielsweise Anorganische mehrbasige Säuren, Alkali-Hypochlorit (incl. Cl₂ im alkalischen Milieu ), Phosgen, Phosphoroxychlorid, Polyphosphate, Akali-Trimetaphosphate, polyfunktionelle Silane
- Epoxy-Verbindungen, ihre Derivate und reaktive Oligo-und Polymere, wie beispielsweise Epichlorhydrin, Epichlorhydrinderivate, z.B. mono- und multifunktionale Glycidylether, Epoxihalide, Substituierte Epoxide, Polyepoxide, Aliphatische Dihalide, substituierte Polyethylene-glycole, wie beispielsweise Diglycoldichlorid.
- Pfropfungsagenzien, die anschließend zur Bildung von Vernetzungsstellen weiterreagiert werden können, beispielsweise durch radikalische Verküpfung oder Polymerisation von Doppelbindungen. Beispiele sind Acrylsäure-Verbindungen, substituierte Acrylate, Vinylgruppen-haltige Verbindungen, Aldehyd-Amid-Kondensate.

In einer weiteren Variante werden Vernetzungen physikalisch erzeugt, beispielsweise durch:
- Thermische Prozesse (wasserfrei), einschließlichschmelzen
- Hydrothermische Prozesse (Hitze-Feuchtigkeitsbehandlung)
- Compoundierungen
- Gefrier/Tau-Prozesse

In einem weiteren Aspekt betrifft die vorliegende Erfindung eine Zusammensetzung, insbesondere kosmetische Zusammensetzung, pharmazeutische Zusammensetzung, Wundschutzmittel, Ultraschallgel, Beschichtungsmittel, Reinigungs- oder Waschmitteladditiv, Schlichtungsmittel für Textilfasern, Symplexbildner, Mittel zur Papierherstellung oder Papierbehandlung, Mittel zur Wasserbehandlung, Bohrflüssigkeit, Nahrungsmittel, Nahrungsmittelzusatzstoff, Adsorbenz, Biozid, Verkapselungsmittel, agrartechnische Zusammensetzung, Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel, Bohrhilfsmittel, aufweisend ein funktionalisiertes Alternan wie zuvor beschrieben. Ebenfalls betrifft die Erfindung die Verwendung des funktionalisierten Alternans in einer solchen Zusammensetzung oder zur Herstellung einer solchen Zusammensetzung. Auch umfasst ist die Verwendung des funktionalisierten Alternan-Polysaccharids als Hauptkomponente oder alleinige Substanz in oben genannten Anwendungen.

Der Begriff Trocknungshilfsmittel und Antikondensationshilfsmittel bedeutet, dass das funktionalisierte Alternan-Polysaccharid einem Trocknungsmittel oder Antikondensationsmittel als zusätzliche Komponente zugegeben wird. In dieser Mischung wirkt das funktionalisierte Alternan-Polysaccharid unter anderem als Viskositätsregulator, beispielsweise zur Verdickung eines Trocknungsmittels, das Wasser aufgenommen hat.

Vorzugsweise handelt es sich bei den erfindungsgemäßen Nahrungsmitteln, die in dieser Beschreibung auch als "Lebensmittel" bezeichnet werden,um Zusammensetzungen enthaltend ein erfindungsgemäßes funktionalisiertes Alternan und (mindestens) einen Stoff der vom Menschen zum Zwecke der Ernährung aufgenommen wird. Zu den Stoffen, die vom Menschen zum Zwecke der Ernährung aufgenommen werden zählen u.a. Ballaststoffe, Mineralstoffe, Wasser, Kohlenhydrate, Proteine, Fette, Vitamine, sekundäre Pflanzenstoffe, Spurenelemente, Aromastoffe, Geschmacksstoffe und/oder Lebensmittelzusatzstoffe.

Bei den erfindungsgemäßen kosmetischen Zusammensetzungen handelt es sich vorzugsweise um Zusammensetzungen enthaltend ein erfindungsgemäßes funktionalisiertes Alternan und einen oder mehrere unter der INCI-Nomenklatur (INCI: International Nomenclature Cosmetic Ingredients) aufgeführten Inhaltsstoffe. Unter die INCI Nomenklatur fallende Inhaltsstoffe sind u.a. veröffentlicht in "International Cosmeticlngredient Dictionary and Handbook, 11th Edition, January 2006, Publisher: CTFA, ISBN: 1882621360. Besonders bevorzugt handelt es sich bei den kosmetischen Zusammensetzungen um Dickungsmittel für Produkte wie Cremes, Gele, Seifen und Pasten, Flüssigreinigungs- und Pflegemittel, Stabilisator für Schäume, Absorbenz in Hygieneprodukten.

Bei den erfindungsgemäßen pharmazeutischen Zusammensetzungen handelt es sich vorzugsweise um Zusammensetzungen enthaltend ein erfindungsgemäßes funktionalisiertes Alternan und (mindestens) eine pharmakologisch wirksame Substanz in Flüssigkeiten, Gelen, Pasten, Filmen, Tabletten, Retardabgabesystemen.

Eine spezielle Anwendung des funktionalisierten Alternans in einer pharmazeutischen Zusammensetzung ist die Verwendung als Verkapselungsmittel für einen oder mehrere therapeutische Wirkstoffe.

In einer pharmazeutischen Zusammensetzung kann das funktionalisierte Alternan auch als therapeutischer Wirkstoff vorhanden sein.

Im Sinne eines Verkapselungsmittels kann das funktionalisierte Alternan generell zur Verkapselung anderer Substanzen oder lebender Materie, insbesondere lebender Zellen, eingesetzt werden.

Die erfindungsgemäßen funktionalisierten Alternane können durch die Vermittlung von Viskosität und der Ausbildung von Gelen bei relativ geringer Konzentration besonders für die Verwendung in Lebensmitteln/Lebensmittelzusammensetzungen geeignet sein, bei denen eine gewisse Dickungsleistung von Relevanz ist. Sie können daher als Viskositätsregulator oder Geliermittel bei der Herstellung und Zubereitung eingesetzt werden (z.B. in Milchprodukten, Backwaren, Getränken, Desserts, Konfitüren, Saucen, Puddings, Wurstwaren, Süßwaren, Halb- und Fertiggerichten etc.) Da die erfindungsgemäßen funktionalisierten Alternane keine oder nur eine geringe Trübung aufweisen, sind sie daher besonders für die Verwendung in Lebensmitten geeignet, die ein klares Erscheinungsbild aufweisen sollen oder müssen. Der stabilisierende Effekt bzw. die emulgierende Aktivität, die die erfindungsgemäßen funktionalisierten Alternane haben, macht sie besonders geeignet für die Verwendung in Lebensmitten, die sowohl lipophile (z.B. Fette), als auch hydrophile Bestandteile aufweisen.

Betreffend kosmetische oder pharmazeutische Zusammensetzungen sind ebenfalls die Viskosität vermittelnden Eigenschaften von erfindungsgemäßen funktionalisierten Alternanen, sowie deren Emulsion stabilisierende bzw. emulgierende Eigenschaften von besonderer Bedeutung. Sie können daher z.B. Bestandteile von Tinkturen, Cremes, Lotionen, Salben, Sonnenschutzmitteln, Schminkmitteln, Zahnputzmitteln, Körper- und Haarpflegemitteln etc. darstellen. Da die erfindungsgemäßen funktionalisierten Alternane verschiedene Gele bilden können, sind sie auch besonders für die Herstellung von Hydrogelen geeignet. Betreffend pharmazeutische Zusammensetzungen können die erfindungsgemäßen funktionalisierten Alternane als Sprengmittel, z.B. in Tabletten verwendet werden.

In noch einem weiteren Aspekt betrifft die Erfindung auch die Verwendung eines funktionalisierten Alternans wie zuvor beschrieben als alleinige Komponente oder optional mit weiteren Bestandteilen, in einer kosmetischen Zusammensetzung, einer pharmazeutischen Zusammensetzung, einem Wundschutzmittel, einem Ultraschallgel, einem Beschichtungsmittel, einem Reinigungs- oder Waschmitteladditiv, einem Schlichtungsmittel für Textilfasern, einem Symplexbildner, einem Mittel zur Papierherstellung oder Papierbehandlung, einem Mittel zur Wasserbehandlung, einer Bohrflüssigkeit, einem Nahrungsmittel, einem Nahrungsmittelzusatzstoff, einem Adsorbenz, einem Biozid, einem Verkapselungsmittel, einer agrartechnischen Zusammensetzung, einem Komplexierungsmittel, einem Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel, oder Bohrhilfsmittel.

In diesen Verwendungen kann das funktionalisierte Alternan allein verwendet werden oder Mischung mit anderen Bestandteilen. Beispielsweise kann das funktionalisierte Alternan selbst als Wundschutzmittel, Nahrungsmittelzusatzstoff, Beschichtungsmittel, Bindemittel, Mittel zur Papierherstellung oder Papierbehandlung, Mittel zur Wasserbehandlung, Biozid, Verkapselungsmittel, Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel, Schlichtungsmittel für Textilfasern, Simplexbildner oder Bohrhilfsmittel verwendet werden.

Nachfolgend wird die Erfindung anhand von Beispielen beschrieben.

### A) Figurenbeschreibung

- Fig. 1: zeigt Molmassenverteilungen von Carboxymethyl-Alternan mit unterschiedlichen DS-Werten.
- Fig. 2: zeigt das Fließverhalten von Carboxymethyl-Alternan in wässriger Lösung im Vergleich zum entsprechenden nicht funktionalisierten Alternan-Ausgangsstoff in wässriger Lösung.
- Fig. 3: zeigt einen Frequenzsweep bei dynamischer Rheologie von Carboxymethyl-Alternan in wässriger Lösung im Vergleich zum entsprechenden nicht funktionalisierten Alternan-Ausgangsstoff.

### B) Allgemeine Methoden

### 1. Herstellung von Alternan

Alternan kann mit Hilfe des Enzyms Alternansucrase hergestellt werden. Das Enzym Alternansucrase kann auf verschiedene Weise mit dem Fachmann bekannten Verfahren hergestellt werden.
Die Herstellung von Alternansucrase und Alternan mit Hilfe von Bakterienstämmen der Spezies *Leuconostocmesenteroides* sind u.a. in Reamakers et al (1997, J. Chem. Tech. Biotechnol. 69, 470-478) oder in WO 2006 088884 (siehe insbesondere Beispiel 1) beschrieben.
Verfahren, die *Leuconostoc mesenteroides* Bakterienstämme zur Herstellung des Enzyms Alternansucrase verwenden, weisen jedoch den Nachteil auf, dass diese Stämme auch andere Sucrasen, insbesondere Dextransucrasen produzieren. Diese anderen Sucrasen können bisher nicht vollständig von Alternansucrase getrennt werden. Es handelt sich daher um eine Mischung unterschiedlicher Enzyme. Das mit einer solchen Enzymmischung hergestellte Alternan weist daher neben Alternan auch zumindest in geringen Mengen Dextran auf. Zur Herstellung reinen Alternans sind daher Methoden zur Herstellung von Alternansucrase mittels rekombinanter Organismen zu bevorzugen. Verfahren zur Herstellung von mittels rekombinanter Organismen hergestellter Alternansucrase und zur Herstellung von Alternan mittels des auf diese Weise hergestellten Enzyms sind u.a. beschrieben in WO 2000 47727, US 2003 229923 (siehe insbesondere Beispiele 2, 5 und 8) oder Joucla et al (2006, FEBS Letters 580, 763-768).

### 2. Bestimmung des Substitutionsgrades (DS)

Die DS-Wert Bestimmung beruht auf die Bestimmung des Gegenions Natrium+ der Carboxymethylgruppe des Alternans.
Das carboxymethylierte Alternan wurde nach Zugabe konzentrierter Salpetersäure und Mikrowellenaufschluss in eine verdünnte wässrige Lösung überführt.
Mittels optischer Emissionsspektrometrie mit induktiv gekoppeltem Plasma (ICP-OES) wurde Na⁺ nachgewiesen und quantifiziert.

### 3. Bestimmung der Molmassenverteilung mittels GPC-MALLS

Zur Bestimmung der Molmassenverteilung mittels Gelpermeationschromatographie, gekoppelt mit Vielwinkellaserlichtdetektor wurden folgende Geräte und Bedingungen verwendet:

| | |
|---|---|
| Geräte: | Gelchromatograph PL120 der Firma Polymer Laboratories Waters Autosampler 717 |
| | DAWN-EOS-Lichtstreudetektor von Wyatt Technology Santa Barbara |
| | mit λ₀= 690 nm und 16 Detektoren im Winkelbereich von 14,9 bis 162,9° sowie K5-Durchflusszelle |
| | Brechungsindexdetektor 410 von Waters |
| Säulen: | SUPREMA-Gel von PSS Mainz |
| | Vorsäule |
| | Säule S100 mit Trennbereich 300 - 10⁴ |
| | Säule S1000 mit Trennbereich 5.10⁴ - 2-10⁶ |
| | Säule S30000 mit Trennbereich 10⁶ - 10⁸ |
| | in Reihe geschaltet |
| Elution: | Laufmittel 0,2m NaNO₃, Flussrate 0,8 ml/min., Temperatur 35°C, Injektionsvolumen 100µl |
| Lösung: | Die Proben wurden 0,2%ig in Wasser bei 24 h bei Raumtemperatur und 1 h bei 95°C gelöst und mit einem 5µm Membranfilter filtriert |

### Auswertung:

Die Lichtstreudaten wurden mit der Software ASTRA Software 4.90.08 ausgewertet.

### 4. Rheologische Charakterisierung

### Rheometer

Es wurde das Rheometer Kinexus der Firma Malvern verwendet. Das Gerät hat folgende Spezifikationen:
Messysteme. Platte-Platte, Kegel-Platte, koaxialer Zylinder, Doppelspalt
Drehmomentbereich von 0.05 µNm bis 200 mNm; Auflösung des Drehmomentes 0.1 nNm
Frequenzbereich: 1 µHz - 150 Hz
Temperaturbereich: -40 - 200 °C; Auflösung 0.01 °C

### Herstellung der Lösungen

Die wässrige Lösung des Carboxymethylalternans wurde in deionisiertem Wasser mit den jeweiligen Mengenverhältnissen für die Konzentration 60 Minuten bei Raumtemperatur gerührt.

### Messung des Fließverhaltens

Die Viskosität wurde im Kegel-Platte Messsystem in Abhängigkeit von der Scherrate direkt nach der Lösungsherstellung gemessen.

### Dynamische Rheologie

Mittels dynamischer Rheologie wird die Struktur einer Lösung oder Dispersion, eines Geles oder eines Festkörpers durch Messung des Speicher (G')- und Verlustmoduls (G") bzw. des elastischen und viskosen Anteils in Abhängigkeit von der Frequenz oder der Deformation gemessen. Diese Methode kam zur Anwendung, um G' und G" in Abhängigkeit von der Frequenz zu messen und aus dem Verlauf dieser Messdaten auf die Struktur des Carboxymethylalternans in Wasser bei der jeweiligen Konzentration im Vergleich zum unsubstituierten Alternan zu evaluieren. Der gewählte Frequenzbereich lag zwischen 0,1 - 10 Hz.

Durchführung der rheologischen Messungen.
Messsystem: Kegel-Platte Messsystem
Konzentration der wässrigen Lösungen 3-10%
Temperatur: 25 °C

Die Methodik für die rheologische Charakterisierung war folgende:
- Fließverhalten im Bereich der Scherrate zwischen 1 und 100 s⁻¹
- Frequenzsweep von 1-10 Hz

### C) Beispiele

### 1. Carboxymethylierung von Alternan

Vorbemerkung: Der Hauptunterschied in den physikalischen Eigenschaften des Alternans zu Cellulose oder Stärke besteht darin, dass es wasserlöslich ist und in Alkali ein größeres Quellvermögen als Cellulose oder Stärke besitzt. Dies hatte einen Einfluss auf die anwendbare Stoffdichte im Reaktionsmedium. Es zeigte sich durch Voruntersuchungen, dass Synthesebedingungen in rein wässrigem Milieu nicht zu den gewünschten Substitutionsgraden führten und die Untersuchung der Konzentrationsverhältnisse von Alternan zu Reagenz- und Alkalisierungsmenge als auch die Gestaltung der Derivatisierung hinsichtlich der Veränderung der Lösungsstruktur des Alternans, sowie Temperatur und Zeit notwendig waren.

### 1.1 Synthese von Carboxymethylalternan mit DS 0,01

### Chemikalien:

- 3,875 ml 50%-igeNaOH ml
- 3,5 g Monochloressigsäure

### Durchführung

- Herstellung der wässrigen Alternanlösung: 447,4 g H₂O im Reaktor mit Anker-Rührer vorgelegt, 52,6 g Alternan langsam bei 150 U/Min. eingearbeitet, Aufheizung der Dispersion auf 90°C unter Rühren,Rühren bei 90°C, 2 h
- 300 g Alternanlösung im 500 ml Parr-Reaktor vorgelegt
- Zutropfen von 3,875 ml 50%-ige NaOH unter Rühren
- Zutropfen von 3,5 g Monochloressigsäure bei Raumtemperatur unter Rühren
- Aufheizen auf 60°C unter Rühren, 24 h bei 60°C Rühren mit 150 U/Min.
- Abkühlung unter Rühren
- Neutralisation mit HCl
- Ausfällung mit Ethanol und Absaugen über Nutsche
- Waschen mit Ethanol/Wasser (40:20; v/v)
- Vakuumtrocknung

### 1.2 Synthese von Carboxymethylalternan mit DS > 0,27

### Chemikalien:

- 300 ml Ethanol
- 27,04 ml 11,5 m NaOH (in 100 ml Ethanol gelöst)
- 16,07 g Monochloressigsäure

### Durchführung

- 42,04g (40,0 g atro) Alternan in 180 ml Ethanol suspendiert
- Zugabe von NaOH in Ethanol unter Rühren
- Zutropfen von Monochloressigsäure bei Raumtemperatur unter Rühren
- Aufheizen auf 70°C unter Rühren, 1h bei 70°C rühren
- Abkühlung unter Rühren
- Neutralisation mit HCl
- Waschen mit Ethanol/Wasser (4:1 v/v)
- Vakuumtrocknung

### 2. Herstellung wässriger Lösungen

Mit dem carboxymethylierten Alternan wurden wässrige 1% Lösungen bei Rautemperatur und bei 95° hergestellt. Die Lösungen warenhomogen und wiesen kaum Sedimentationen auf und unterschieden sich visuell in ihrer Transparenz. Die Unterschiede in der Transparenz wurden im Vergleich zur Ausgangsprobe spektralphotometrisch bei einer Wellenlänge von 650 nm gemessen. Die nachfolgende Tabelle gibt eine Übersicht der Messdaten. Die Transparenz wurde durch die Substitution signifikant erhöht.

**Tabelle 2: Transparenz von carboxyliertem Alternan in Lösung**

| Probe | Transparenz bei 650 nm, c = 1% | |
|---|---|---|
| | nach Lösungsherstellung bei 25°C | nach Lösungsherstellung bei 95°C |
| Alternan | 70,8 | 75,0 |
| Alt-CM-DS-0.001 | 86,0 | 91,9 |
| Alt-CM-DS-0.01 | 91,3 | 96,2 |

### 3. Molekulare Charakterisierung

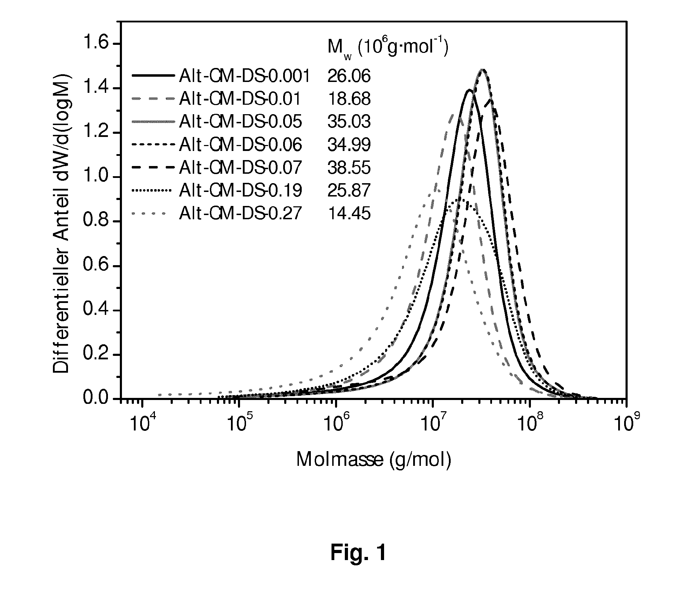

In der Fig. 1 ist die Molmassenverteilung von verschiedenen carboxylierten Alternanen dargestellt. Bei Einsatz größerer Reagenz und Alkalisierungsmittel in der Carboxymethylierung für den DS-Bereich >0.1 wurde ein deutlicherer molekularer Abbau erzeugt.

### 4. Rheologische Eigenschaften

Das carboxlierte Alternan wurde hinsichtlich des Fließverhaltens in Abhängigkeit von der Scherrate und mittels dynamischer Rheologie bezüglich der Lösungsstruktur charakterisiert.

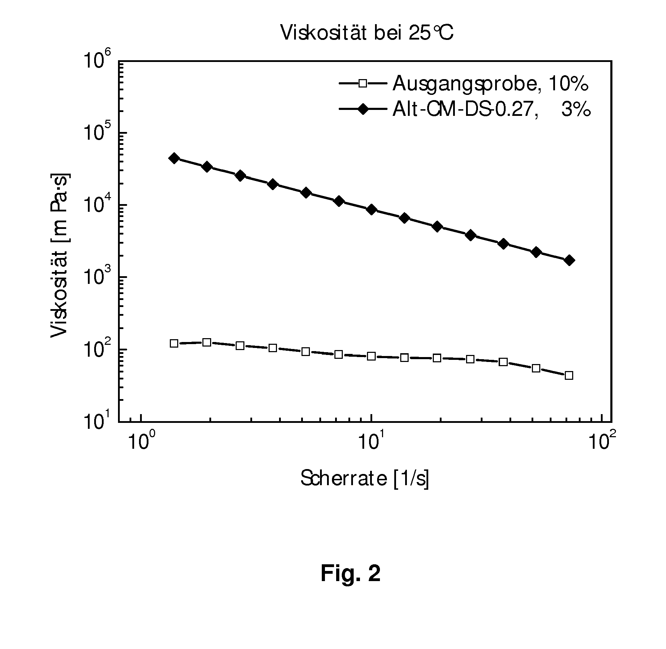

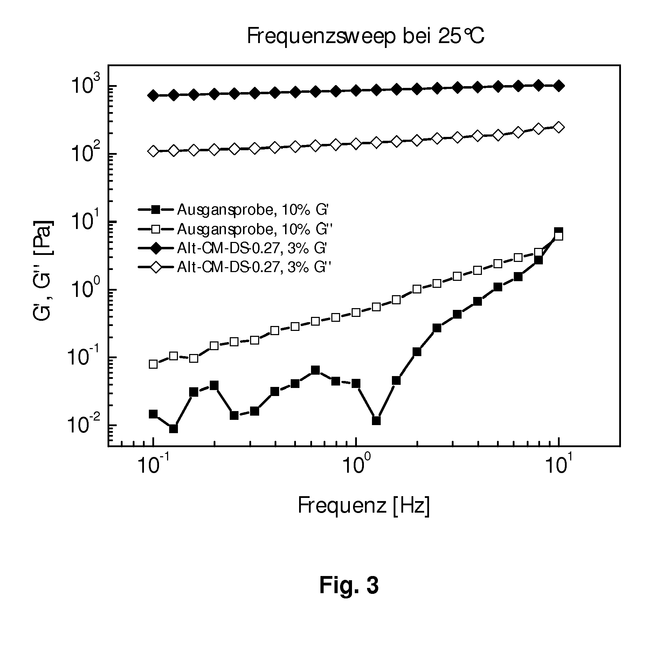

Durch Carboxymethylierung wurden so stark viskositätsbildende Alternanderivate erhalten, dass die Herstellung und Messung 10%iger wässriger Lösungen nicht mehr möglich war und die Konzentration auf 3% erniedrigt werden musste. Die Viskositäten waren um mehrere Größenordnungen höher als bei der 10%igen Alternanlösung (Fig. 2). Ebenso erhöht waren die Werte für G' (Speichermodul) und G" (Verlustmodul). G' (Speichermodul) und G" (Verlustmodul) zeigten kaum noch eine Abhängigkeit von der Frequenz. Der Speichermodul wies sehr viel höhere Werte auf als der Verlustmodul (Fig. 3). Das ist der Nachweis eines Gelzustandes. Die ionischen Alternanether hoher Molmassebesaßen die Eigenschaft der Hydrogelbildung, was bei relativ niedrigen Substitutionsgraden überraschend war. Das Gel wird durch Verschlaufungen (entanglements) der Makromoleküle gebildet und nicht durch stereoreguläre Bindungszonen über intermolekulare H-Brücken.

### 5. Spinnversuche

Dargestellt ist das Ergebnis der Untersuchung der Filamentbildung mit 10 und 12,5%-igen wässrigen Lösungen des Alternans.

Die Lösungen konnten durch eine Düse in ein Koagulationsbad, vergällten Ethanol enthaltend, gedrückt werden. Das Vermögen zur Koagulation wurde bei 0°C, Raumtemperatur und 70°C untersucht. Beim Austritt aus der Düse bildeten die Alternanlösungen keinen Strang, sondern Tropfen, die im Koagulationsbad bei jeder untersuchten Temperatur einen feinen weißen Niederschag bildeten.

In weiteren Versuchen wurde die konzentrierte Alternanlösung extrudiert. Dabei bildete sich zunächst ein farbloser Strang, der direkt ins Koagulationsbad geleitet wurde. Der Strang wurde durch die Entwässerung weiß und zerfiel in kleine Partikel. Der Strang hatte keine mechanische Stabilität. Die Temperatur des Fällmediums hatte keinen signifikanten Effekt auf die Strangstabilität gezeigt.

Es war nicht möglich, mit Alternan eine fibrilläre Struktur herzustellen.

## Patentansprüche

1. Funktionalisiertes Alternan-Polysaccharid, **dadurch gekennzeichnet, dass** es Carboxygruppen als funktionelle Gruppen aufweist.

2. Funktionalisiertes Alternan-Polysaccharid nach Anspruch 1, **dadurch gekennzeichnet, dass** es Strukturen der Formel (I) aufweist: 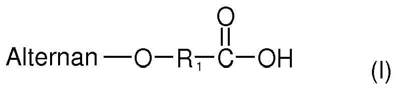 wobei R₁
eine Kohlenwasserstoffgruppe mit 1 bis etwa 100 Kohlenstoffatomen ist, die ein oder mehrere Heteroatome aufweisen kann und wobei an dem Alternan eine oder mehrere der Gruppen -R₁-COOH vorhanden sein können und
wobei eine oder mehrere der Gruppen -R₁-COOH zu -R₁-COO⁻ deprotoniert sein können.

3. Funktionalisiertes Alternan-Polysaccharid nach einem der vorangehenden Ansprüche, **dadurch gekennzeichnet, dass** es Strukturen der Formel (II) aufweist: 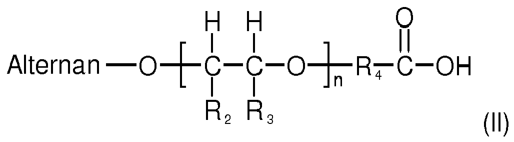 wobei
n eine ganze Zahl von 1 bis etwa 30 ist,
R₂ und R₃ ausgewählt sind aus H oder einer Kohlenwasserstoffgruppe mit 1 bis etwa 6 Kohlenstoffatomen, wobei R₂ und R₃ in den -(CHR₂-CHR₃O)- Einheiten gleich oder verschieden sein können und jeder R₂ und R₃ in einer -(CHR₂-CHR₃O)- Einheit unabhängig ausgewählt sein kann von jedem R₂ und R₃ in einer anderen -(CHR₂-CHR₃-O)- Einheit,
R₄ eine Kohlenwasserstoffgruppe mit 1 bis etwa 10 Kohlenstoffatomen ist,
wobei an dem Alternan eine oder mehrere der Gruppen
-[CHR₂-CHR₃-O]ₙR₄COOH vorhanden sein können, die verschiedene Zahlen n aufweisen können, und
wobei eine oder mehrere der Gruppen -[CHR₂-CHR₃-O]ₙR₄COOH zu
-[CHR₂-CHR₃-O]ₙR₄COO⁻ deprotoniert sein können.

4. Funktionalisiertes Alternan-Polysaccharid nach Anspruch 2 oder 3, wobei R₁ bzw. R₄ eine Alkylengruppe, vorzugsweise eine Methylengruppe, ist.

5. Funktionalisiertes Alternan-Polysaccharid nach einem der vorangehenden Ansprüche, das außerdem eine oder mehrere Gruppen der Formel (III) aufweist 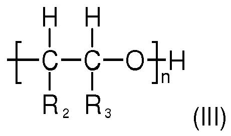 wobei die Gruppe der Formel (III) über eine Etherbrücke mit dem Alternanpolysaccharid verbunden ist,
n eine ganze Zahl von 1 bis etwa 30 ist,
R₂ und R₃ ausgewählt sind aus H oder einer Kohlenwasserstoffgruppe mit 1 bis etwa 6 Kohlenstoffatomen, wobei R₂ und R₃ in den -(CHR₂-CHR₃O)- Einheiten gleich oder verschieden sein können und jeder R₂ und R₃ in einer -(CHR₂-CHR₃O)- Einheit unabhängig ausgewählt sein kann von jedem R₂ und R₃ in einer anderen -(CHR₂-CHR₃-O)- Einheit.

6. Funktionalisiertes Alternan-Polysaccharid nach einem der vorangehenden Ansprüche, das ein Gewichtsmittel des Molekulargewichts Mw im Bereich von größer als 3.000 g/mol bis 60.000.000 g/mol aufweist.

7. Funktionalisiertes Alternan-Polysaccharid nach einem der vorangehenden Ansprüche, **dadurch gekennzeichnet, dass** die durchschnittliche Anzahl Carboxy-funktionalisierter Hydroxylgruppen des Alternans pro Anhydroglucoseeinheit 0,02 bis 3 beträgt, vorzugsweise 0,05 bis 2.

8. Funktionalisiertes Alternan-Polysaccharid nach einem der vorangehenden Ansprüche, **dadurch gekennzeichnet, dass** es vernetzt ist.

9. Funktionalisiertes Alternan-Polysaccharid nach einem der vorangehenden Ansprüche, **dadurch gekennzeichnet, dass** es wasserlöslich ist.

10. Funktionalisiertes Alternan-Polysaccharid nach einem der vorangehenden Ansprüche, **dadurch gekennzeichnet, dass** es nicht mikrostrukturiert, insbesondere nicht mikrofibrillär, ist.

11. Verfahren zur Funktionalisierung von Alternan-Polysaccharid mit Carboxygruppen, wobei Alternan-Polysaccharid in einem flüssigen Reaktionsmedium, das vorwiegend Wasser oder vorwiegend einen Alkohol aufweist, mit einem Funktionalisierungsmittel, das eine Carboxygruppe aufweist, unter Zusatz einer alkalischen Komponente umgesetzt wird.

12. Verfahren nach Anspruch 11, wobei das Alternan-Polysaccharid, oder das mit Carboxygruppen funktionalisierte Alternan-Polysaccharid, in einem weiteren Schritt mit einer oder mehreren Epoxyverbindungen umgesetzt wird.

13. Verfahren nach Anspruch 11 oder 12, wobei das flüssige Reaktionsmedium vorwiegend einen Alkohol aufweist und der Alkohol ausgewählt ist aus Methanol, Ethanol, Propanol, Isopropanol, Butanol, Isobutanol, oder einer Mischung davon.

14. Verfahren nach einem der Ansprüche 11-13, wobei das Verfahren einen Vernetzungsschritt aufweist.

15. Zusammensetzung, insbesondere kosmetische Zusammensetzung, pharmazeutische Zusammensetzung, Wundschutzmittel, Ultraschallgel, Beschichtungsmittel, Reinigungs- oder Waschmitteladditiv, Schlichtungsmittel für Textilfasern, Symplexbildner, Mittel zur Papierherstellung oder Papierbehandlung, Mittel zur Wasserbehandlung, Bohrflüssigkeit, Nahrungsmittel, Nahrungsmittelzusatzstoff, Adsorbenz, Biozid, Verkapselungsmittel, agrartechnische Zusammensetzung, Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel, Bohrhilfsmittel, umfassend ein funktionalisiertes Alternan-Polysaccharid wie in einem der Ansprüche 1-10 genannt.

16. Verwendung eines funktionalisierten Alternan-Polysaccharids wie in einem der Ansprüche 1-10 genannt, als alleinige Komponente oder optional mit weiteren Bestandteilen, in einer kosmetischen Zusammensetzung, einer pharmazeutischen Zusammensetzung, einem Ultraschallgel, einem Beschichtungsmittel, einem Reinigungs- oder Waschmitteladditiv, einem Schlichtungsmittel für Textilfasern, einem Symplexbildner, einem Mittel zur Papierherstellung oder Papierbehandlung, einem Mittel zur Wasserbehandlung, einer Bohrflüssigkeit, einem Nahrungsmittel, einem Nahrungsmittelzusatzstoff, einem Adsorbenz, einem Verkapselungsmittel, einer agrartechnischen Zusammensetzung, einem Komplexierungsmittel, einem Emulgator, einem Tensid, einem Viskositätsregulator, einem Bindemittel, einem Leimungsmittel, einem Schutzkolloid, einem Dispersionsmittel, einem Ionenaustauscher, einem Wasserenthärter, einem Flockungsmittel, einem Trocknungshilfsmittel, einem Antikondensationshilfsmittel, oder einem Bohrhilfsmittel.
